# EUROPEAN PATENT SPECIFICATION

(11) **EP 3 534 657 B1**
(45) Date of publication and mention of the grant of the patent: **04.08.2021**
(21) Application number: 17865161.8
(22) Date of filing: 17.08.2017
(51) Int. Cl.: H04W 72/04, H04L 5/00

(54) **DYNAMIC TIME ALLOCATION METHOD AND DEVICE**
DYNAMISCHES ZEITZUWEISUNGSVERFAHREN UND -VORRICHTUNG
PROCÉDÉ ET DISPOSITIF D'ATTRIBUTION DYNAMIQUE DE RESSOURCES

(30) Priority: 28.10.2016 CN 201610967239
(43) Date of publication of application: 04.09.2019
(73) Proprietor: ZTE Corporation, Shenzhen, Guangdong 518057 (CN)
(72) Inventor: LU, Liuming, Shenzhen Guangdong 518057 (CN); YUAN, Liquan, Shenzhen Guangdong 518057 (CN); ZHANG, Weiliang, Shenzhen Guangdong 518057 (CN)
(74) Representative: Canzler & Bergmeier Patentanwälte Partnerschaft mbB
(86) International application number: PCT/CN2017/097889
(87) International publication number: WO 2018/076903

(56) References cited:
- CN-A- 103 634 086
- CN-A- 104 350 685
- CN-A- 105 009 465
- CN-A- 105 827 276
- US-A1- 2015 085 715
- US-A1- 2016 036 491
- SCKIPIO ET AL: "G.fast: DTA text proposal for Annex X;2016-08-03-Q4-025", ITU-T DRAFT ; STUDY PERIOD 2013-2016, INTERNATIONAL TELECOMMUNICATION UNION, GENEVA ; CH , vol. 4/15 8 August 2016 (2016-08-08), pages 1-8, XP044185808, Retrieved from the Internet: URL:http://q4sg15.itu.ch/ties/Mtgs16/Q4/Te leconferences/2016-08-03-Q4-025.docx [retrieved on 2016-08-08]
- SCKIPIO ET AL: "G.fast: signalling of DTA updates over the RMC;2016-06-Q4-043", ITU-T DRAFT ; STUDY PERIOD 2013-2016, INTERNATIONAL TELECOMMUNICATION UNION, GENEVA ; CH , vol. 4/15 20 June 2016 (2016-06-20), pages 1-3, XP044175210, Retrieved from the Internet: URL:http://q4sg15.itu.ch/ties/Mtgs16/Q4/20 16-06-Q4-043.docx [retrieved on 2016-06-20]
- LES BROWN HUAWEI CHINA: "G.fast: Updated Draft text for G.9701 Amendment 3 (for consent);TD 645 (PLEN/15)", ITU-T DRAFT ; STUDY PERIOD 2013-2016, INTERNATIONAL TELECOMMUNICATION UNION, GENEVA ; CH , vol. 4/15 7 September 2016 (2016-09-07), pages 1-49, XP044180802, Retrieved from the Internet: URL:https://www.itu.int/ifa/t/2013/sg15/do cs/160919/td/plen/T13-SG15-160919-TD-PLEN- 0645!!MSW-E.docx [retrieved on 2016-09-07]
- "Series G: Transmission systems and media, digital systems and Network access Networks-Metallic acces Networks, fast acces to subscriber terminals (G.Fast)-Physical Layer Specification G.9701", Telecommunication Standardization Sector of ITU, 31 December 2014 (2014-12-31), pages 1-324, XP055592408,
- "Series G: Transmission Systems and Media, Digital Systems and Networks Digital Sections and Digital Line System-Metallic Access Networks, Physical Layer Management for G.Fast Tranceivers G.997.2", Telecommunication Standardization Sector of ITU, 31 May 2015 (2015-05-31), pages 1-66, XP055592417,

## Description

### TECHNICAL FIELD

The present disclosure relates, but not limited to the access network field, and more particularly, relates to a dynamic time allocation method and apparatus.

### BACKGROUND

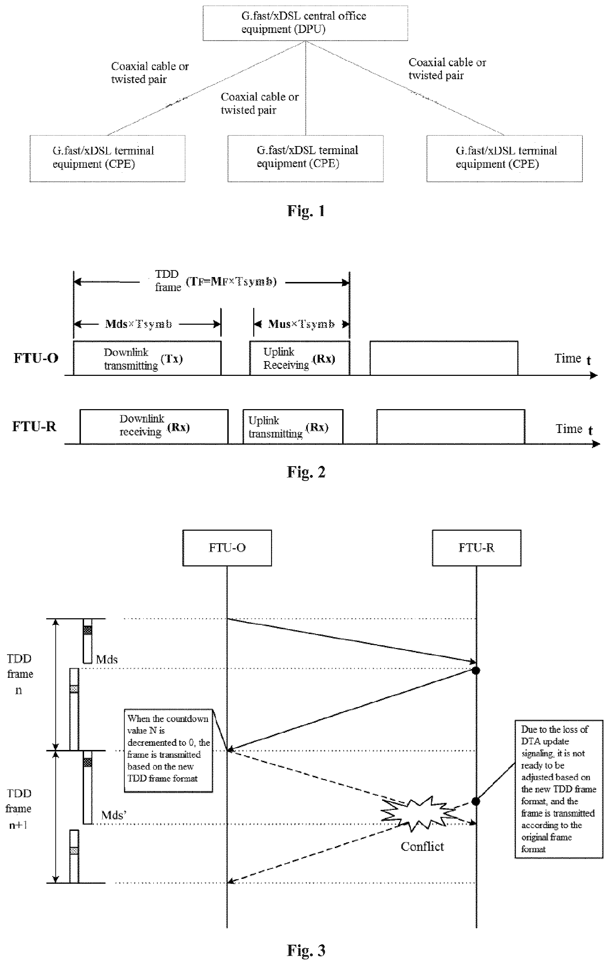

The copper cable access system includes Fast Access Subscriber Terminal (FAST) system and Very High Speed Digital Subscriber Line 2 (VDSL2) system. The network architecture of the copper cable access system may comprise G.fast/xDSL central office equipment (DPU, Distributed Processing Unit) and G.fast/xDSL terminal equipment (CPE, Customer Premise Equipment). The Gfast/xDSL central office equipment (DPU) may provide multiple interfaces to be connected to multiple terminal equipments (CPE) respectively, that is, the central office module (FTU-O, Fast Transceiver Unit at the Optical network unit) is connected (P2P (Peer to Peer) architecture) to each terminal module (FTU-R, Fast Transceiver Unit at the Remote site), as shown in Fig. 1. The connection media between the corresponding interface of the Gfast/xDSL central office and the terminal devices may be a copper cable, such as a twisted pair cable or a coaxial cable. G.fast adopts Time Division Duplexing (TDD) mode. Each TDD frame contains Mds downlink symbols and Mus uplink symbols, as shown in Fig. 2 (Tsymb represents the symbol period, T_{F} is the TDD frame period, M_{F} = Mds + Mus + 1) - see also SCKIPIO ET AL: "G.fast: signalling of DTA updates over the RMC; 2016-06-Q4-043", ITU-T DRAFT ; STUDY PERIOD 2013-2016, INTERNATIONAL TELECOMMUNICATION UNION, GENEVA, CH, vol. 4/15 20 June 2016.

### SUMMARY

The invention is defined in the appended claims.

The following is an overview of the subject matters detailed in the present disclosure.

Embodiments of the present disclosure provide a dynamic time assignment method and apparatus.

According to an embodiment of the present disclosure, there is provided a dynamic time assignment method, including:
receiving a DTA update request instruction, wherein the DTA update request instruction includes new TDD frame configuration information, wherein the new TDD frame configuration information includes the number of downlink symbols of the TDD frame to be updated;
transmitting a DTA update instruction to the terminal in each TDD frame continuously, wherein the DTA update instruction includes the number of downlink symbols and a countdown value of the TDD frame to be updated, wherein the countdown value of the frame is decremented until zero according to each TDD frame;
determining, according to state information, whether to start TDD frame communication based on the new TDD frame configuration information.

The method further includes: determining the state information based on the following judgment results:
whether the countdown value of the frame is 0;
whether the number of downlink symbols of the TDD frame to be updated is greater than the current number of downlink symbols;
whether it ishas been confirmed that the terminal has transmitted an uplink symbol based on the new TDD frame configuration information;
whether confirmation information that the terminal receives the DTA update instruction is received;
whether the terminal has enough slots for DTA update.

Determining according to state information, whether to start TDD frame communication based on the new TDD frame configuration information includes:
if the number of downlink symbols of the TDD frame to be updated is smaller than the current number of downlink symbols, and if the countdown value of the frame reaches 0, directly starting the communication of the TDD frame using the new TDD frame configuration information.

Determining according to state information, whether to start TDD frame communication based on the new TDD frame configuration information includes:
if the number of downlink symbols of the TDD frame to be updated is greater than the current number of downlink symbols, and if the countdown value of the frame reaches 0:
if the confirmation information that the terminal has received the DTA update instruction is not received and it is confirmed that the terminal has not transmitted the uplink symbol based on the new TDD frame configuration information, not starting communication of the TDD frame based on the new TDD frame configuration information;
if confirmation information that the terminal has received the DTA update instruction is received, or it is confirmed that the terminal has enough slots for DTA update, or it is confirmed that the terminal has transmitted the uplink symbol based on the new TDD frame configuration information, starting communication of the TDD frame based on new TDD frame configuration information.

Determining according to state information, whether to start TDD frame communication based on the new TDD frame configuration information includes:
if the countdown value of the frame reaches 0, then if confirmation information that the terminal has received the DTA update instruction is received, or it is confirmed that the terminal has enough slots for DTA update, or it is confirmed that the terminal has transmitted the uplink symbol based on the new TDD frame configuration information, starting communication of the TDD frame based on the new TDD frame configuration information.

According to another embodiment of the present disclosure, there is provided a dynamic time assignment method, including:
receiving a DTA update instruction, wherein the DTA update instruction includes the number of downlink symbols and a countdown value of the TDD frame to be updated, wherein the countdown value of the frame is decremented until zero according to each TDD frame;
determining, according to state information, whether to start communication of the TDD frame based on the new TDD frame configuration information, wherein the new TDD frame configuration information includes the number of downlink symbols of the TDD frame to be updated.

The method further includes: determining the state information based on the following judgment results:
whether the countdown value of the frame is 0;
whether it is ready for DTA update.

Determining according to state information, whether to start communication of the TDD frame based on the new TDD frame configuration information includes:
if a DTA update signaling is received and the countdown value of the frame does not reach 0, not starting communication of the TDD frame based on the new TDD frame configuration information;
if the countdown value of the frame reaches 0, or the DTA update is ready, starting communication of the TDD frame based on the new TDD frame configuration information;
if the countdown value of the frame reaches 0, and the DTA update is not ready, not starting communication of the TDD frame based on the new TDD frame configuration information.

According to an embodiment of the present disclosure, there is provided a dynamic time assignment apparatus, including:
a first communication unit, configured to receive a DTA update request instruction, wherein the DTA update request instruction includes new TDD frame configuration information, wherein the new TDD frame configuration information includes the number of downlink symbols of the TDD frame to be updated;
the first communication unit, configured to transmit a DTA update instruction to a terminal in each TDD frame continuously, wherein the DTA update instruction includes the number of downlink symbols and a countdown value of the TDD frame to be updated, wherein the countdown value of the frame is decremented until zero according to each TDD frame; and
a first execution unit, configured to determine, according to state information, whether to start communication of the TDD frame based on the new TDD frame configuration information.

The apparatus further includes: a first state determining unit, configured to determine the state information based on the following judgment results:
whether the countdown value of the frame is 0;
whether the number of downlink symbols of the TDD frame to be updated is greater than the current number of downlink symbols;
whether it is confirmed that the terminal has transmitted an uplink symbol based on the new TDD frame configuration information;
whether confirmation information that the terminal receives the DTA update instruction is received;
whether the terminal has enough slots for DTA update.

The first execution unit is configured such that if the number of downlink symbols of the TDD frame to be updated is smaller than the current number of downlink symbols, and if the countdown value of the frame reaches 0, the communication of the TDD frame using the new TDD frame configuration information will be directly started.

The first execution unit is configured such that if the number of downlink symbols of the TDD frame to be updated is greater than the current number of downlink symbols, and if the countdown value of the frame reaches 0:
if confirmation information that the terminal has received the DTA update instruction is not received and it is confirmed that the terminal has not transmitted the uplink symbol based on the new TDD frame configuration information, communication of the TDD frame based on new TDD frame configuration information will not be started; if confirmation information that the terminal has received the DTA update instruction is received, or it is confirmed that the terminal has enough slots for DTA update, or it is confirmed that the terminal has transmitted the uplink symbol based on the new TDD frame configuration information, communication of the TDD frame based on new TDD frame configuration information will be started.

The first execution unit is configured such that if the countdown value of the frame reaches 0, then if the confirmation information that the terminal has received the DTA update instruction is received, or it is confirmed that the terminal has enough slots for DTA update, or it is confirmed that the terminal has transmitted the uplink symbol based on the new TDD frame configuration information, communication of the TDD frame based on the new TDD frame configuration information will be started.

According to another embodiment of the present disclosure, there is provided a dynamic time assignment apparatus, including:
a second communication unit, configured to receive a DTA update instruction, wherein the DTA update instruction includes the number of downlink symbols and a countdown value of the TDD frame to be updated, wherein the countdown value of the frame is decremented until zero according to each TDD frame;
a second execution unit, configured to determine, according to state information, whether to start communication of the TDD frame based on the new TDD frame configuration information, wherein the new TDD frame configuration information includes the number of downlink symbols of the TDD frame to be updated.

The apparatus further includes: a second state determining unit, configured to determine the state information based on the following judgment results:
whether the countdown value of the frame is 0;
whether it is ready for DTA update.

The second state determining unit is configured such that if DTA update signaling is received and the countdown value of the frame does not reach 0, communication of the TDD frame based on the new TDD frame configuration information will not be started; if the countdown value of the frame reaches 0, or the DTA update is ready, communication of the TDD frame based on the new TDD frame configuration information will be started; if the countdown value of the frame reaches 0, and the DTA update is not ready, communication of the TDD frame based on the new TDD frame configuration information is not started.

According to an embodiment of the present disclosure, there is provided a computer readable storage medium, storing computer executable instructions, the dynamic time assignment method described above is implemented when the computer executable instructions are executed by a processor.

In the embodiments of the present disclosure, the central office receives the DTA update request instruction, the DTA update request instruction includes new TDD frame configuration information, and the new TDD frame configuration information includes the number of downlink symbols of the TDD frame to be updated; transmitting a DTA update instruction to the terminal in each TDD frame continuously, wherein the DTA update instruction includes the number of downlink symbols and a countdown value of the TDD frame to be updated, wherein the countdown value of the frame is decremented until zero according to each TDD frame; determining, according to state information, whether to start TDD frame communication based on the new TDD frame configuration information. The terminal receives the DTA update instruction, the DTA update instruction includes the number of downlink symbols and a countdown value of the TDD frame to be updated, wherein the countdown value of the frame is decremented until zero according to each TDD frame; determining, according to state information, whether to start TDD frame communication based on the new TDD frame configuration information, wherein the new TDD frame configuration information includes the number of downlink symbols of the TDD frame to be updated. The embodiments of the present disclosure effectively improves the reliability and robustness of transceiver mechanism and the trigger mechanism of the DTA update signaling, avoids the synchronization abnormality between the central office and the terminal and the DTA update failure due to the loss or error of the data symbols carrying the DTA update signaling, thereby effectively ensuring the smooth completion of the DTA update in the showtime phase.

Other aspects will be apparent upon reading and understanding the drawings and detailed description.

### BRIEF DESCRIPTION OF THE DRAWINGS

Fig. 1 is a schematic diagram showing a G.fast/xDSL system architecture;
Fig. 2 is a schematic diagram showing a TDD frame structure;
Fig. 3 is a schematic diagram showing a stateless DTA update process;
Fig. 4 is a diagram showing a DTA update processing framework according to an embodiment of the present disclosure;
Fig. 5 is a schematic flowchart 1 showing a dynamic time assignment method according to an embodiment of the present disclosure;
Fig. 6 is a schematic flowchart 2 showing a dynamic time assignment method according to an embodiment of the present disclosure;
Fig. 7 is a state diagram showing a central office DTA update process according to an embodiment of the present disclosure;
Fig. 8 is a state diagram showing a terminal DTA update process according to an embodiment of the present disclosure;
Fig. 9 is an example I showing a DTA update process when (Mds) new < Mds according to an embodiment of the present disclosure;
Fig. 10 is an example II showing a DTA update process when (Mds) new < Mds according to an embodiment of the present disclosure;
Fig. 11 is an example showing a DTA update process when (Mds) new > Mds according to an embodiment of the present disclosure;
Fig. 12 is a schematic diagram showing a structure of a dynamic time assignment apparatus according to the first exemplary embodiment of the present disclosure.
Fig. 13 is a schematic diagram showing a structure of a dynamic time assignment apparatus according to the second exemplary embodiment of the present disclosure.

### DETAILED DESCRIPTION

In order to have a more detailed understanding of the characteristic and technical contents of the embodiments of the present disclosure, the implementation of the embodiments of the present disclosure will be described below with reference to the drawings. The accompanying drawings are for reference only, rather than limiting the embodiments of the present disclosure.

At present, when Dynamic Time Assignment (DTA) dynamically adjusts the Mds during the showtime phase, FTU-O transmits a DTA update instruction to the FTU-R. The instruction includes the number of downlink symbols Mds(new) in the new TDD frame configuration and the countdown value of the DTA frame (N). The FTU-O repeatedly transmits the DTA update instruction to the FTU-R, wherein each time a TDD frame is transmitted, N is decremented by 1. When the value of N is decremented to 0, the transmission of frame based on a new TDD frame format is triggered. However, when the DTA update signaling is lost and the FTU-R is not ready to be adjusted based on the new TDD frame format, if Mds(new)>Mds, the FTU-R data reception and transmission conflicts, as shown in Fig. 3.

According to an embodiment of the present disclosure, there is provided a transceiving and triggering mechanism of DTA update signaling, and a method as to how the central office and the terminal cooperate to trigger a communication based on a new Mds/Mus TDD frame under a specific condition or state, avoiding synchronization abnormality between the central office and the terminal and the DTA update failure due to the loss or error of the data symbols carrying the DTA update signaling; wherein, DTA update means that after receiving the new Mds (that is, the number of downlink symbols in the TDD frame) configuration instruction indicated by the Dynamic Resource Administrator (DRA), the FTU-O of the central office transmits the instruction to the FTU-R of terminal, and after coordination, communication is made by means of the TDD frame based on the new Mds.

The central office will judge whether to trigger communication based on the new TDD frame configuration information (new Mds/Mus), according to whether the countdown value of the DTA frame (N) is 0, whether Mds(new) (i.e. the value to be updated) is greater than Mds (current value), whether it is confirmed that the terminal has transmitted the uplink symbol based on the new TDD frame configuration information (for example, it may be judged according to the position of the RMC symbol), whether the confirmation information Ack that the terminal receives the DTA update instruction has been received, and confirming whether the terminal has enough slots for performing DTA update (for example, it may be judged by the N value corresponding to the confirmation information Ack) and other status conditions. The terminal determines whether to trigger communication based on the new TDD frame configuration information (new Mds/Mus) according to whether the DTA frame countdown value (N) is 0 or whether it is ready for DTA update. As to how the central office and the terminal determine to initiate communication based on the new TDD frame configuration information (new Mds/Mus) by using the combination of the above-mentioned several conditions or states, the following "DTA update processing method" in embodiments of the present disclosure may be referred to.

The DTA update processing architecture in embodiments of the present disclosure is explained below.

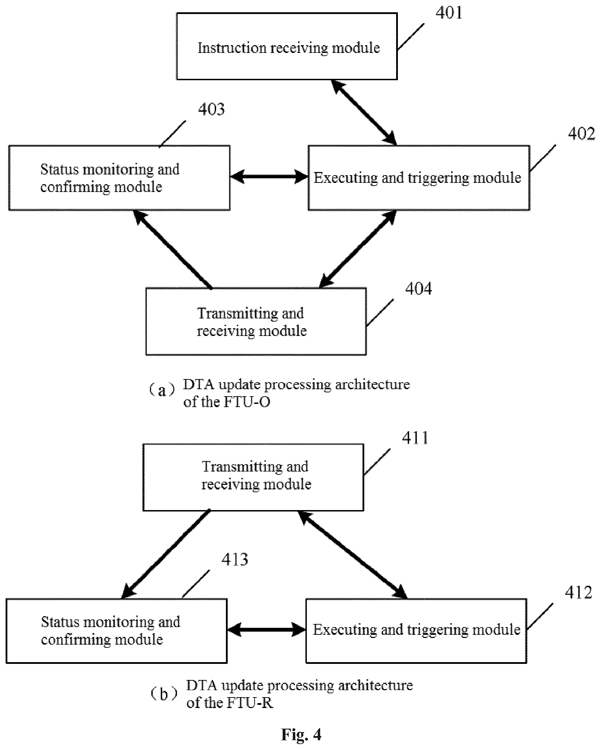

Referring to Fig. 4, the DTA update processing architecture includes two aspects, respectively, a DTA update processing architecture of the FTU-O as shown in Fig. 4(a), and a DTA update processing of the FTU-R as shown in Fig. 4(b); wherein, FTU-O is a central office module, therefore, the central office in the following embodiments specifically refers to the FTU-O. Similarly, FTU-R is a terminal module, therefore the terminal in the following embodiments specifically refers to the FTU-R.

Referring to Fig. 4(a): the DTA update processing architecture of the FTU-O includes: an instruction receiving module 401, an executing and triggering module 402, a status monitoring and confirming module 403, and a transmitting and receiving module 404; wherein,
the instruction receiving module 401 is configured to receive a DTA update request instruction (including Mds to be adjusted) from a DRA (Dynamic Resource Administrator);
the executing and triggering module 402 is configured to determine, according to the state information fed back by the status monitoring and confirming module, whether to start to transmit the TDD frame based on the new TDD frame configuration information; at the same time, the DTA update instruction information to be transmitted is transmitted back to the transceiver module, including Mds(new) and the countdown value of the DTA frame (N), wherein N is decremented, according to each TDD frame, until 0;
the transmitting and receiving module 404 is configured to continuously transmit a DTA update instruction carrying Mds(new) and N to the FTU-R in each TDD frame; and receive the TDD frame uplink symbol information (including possible DTA update instruction acknowledgement information, etc.) transmitted by the FTU-R; and start to transmit and receive the TDD frame based on the new TDD frame configuration information according to the triggering instruction;
the status monitoring and confirming module 403 is configured to monitor the N value, Mds and Mds(new) and changes thereof (i.e., whether Mds(new) is increasing or decreasing), confirm whether confirmation information that the terminal receives the DTA update instruction has been received, confirm whether the terminal has enough slots for DTA update, and whether the terminal has transmitted the uplink symbols based on the new TDD frame configuration information (judging according to the position of the RMC symbol).

Referring to Fig. 4(b): the DTA update processing architecture of the FTU-R includes: an executing and triggering module 412, a status monitoring and confirming module 413, and a transceiver module 411; wherein,
the status monitoring and confirming module 413 is configured to monitor whether the DTA update instruction is received; if the DTA update instruction is received, the countdown value (N) of the DTA frame will be monitored (N is decremented, according to each TDD frame, until 0), whether the DTA update is ready, etc.;
the executing and triggering module 412 is configured to determine, according to the state information fed back by the status monitoring and confirming module, whether to start communication of the TDD frame based on the new TDD frame configuration information;
the transceiver module 411 is configured to receive a DTA update instruction with the Mds (new) and the countdown value (N) of the DTA frame; and start to transmit and receive the TDD frame based on the new TDD frame configuration information according to the triggering instruction.

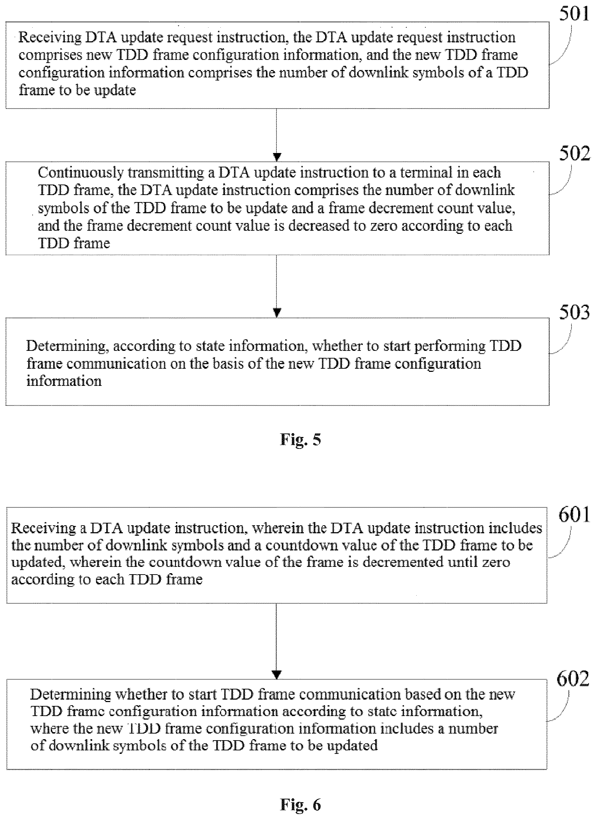

Fig. 5 is a schematic flowchart 1 showing a dynamic time assignment method according to an embodiment of the present disclosure. As shown in Fig. 5, the dynamic time assignment method includes the following steps.

In step 501, receiving a DTA update request instruction, wherein the DTA update request instruction includes new TDD frame configuration information, wherein the new TDD frame configuration information includes the number of downlink symbols of the TDD frame to be updated.

In step 502, transmitting a DTA update instruction to the terminal in each TDD frame continuously, wherein the DTA update instruction includes the number of downlink symbols and a countdown value of the TDD frame to be updated, wherein the countdown value of the frame is decremented until zero according to each TDD frame.

In step 503, determining, according to state information, whether to start TDD frame communication based on the new TDD frame configuration information.

In an embodiment of the present disclosure, the method further includes: determining the state information based on the following judgment results:
whether the countdown value of the frame is 0;
whether the number of downlink symbols of the TDD frame to be updated is greater than the current number of downlink symbols;
whether it is confirmed that the terminal has transmitted an uplink symbol based on the new TDD frame configuration information;
whether confirmation information that the terminal receives the DTA update instruction has been received;
whether the terminal has enough slots for DTA update.

In an embodiment of the present disclosure, determining, according to state information, whether to start TDD frame communication based on the new TDD frame configuration information includes:
if the number of downlink symbols of the TDD frame to be updated is smaller than the current number of downlink symbols, and if the countdown value of the frame reaches 0, directly starting the communication of the TDD frame using the new TDD frame configuration information.

In an embodiment of the present disclosure, determining, according to state information, whether to start TDD frame communication based on the new TDD frame configuration information includes:
if the number of downlink symbols of the TDD frame to be updated is greater than the current number of downlink symbols, and if the countdown value of the frame reaches 0:
if the confirmation information that the terminal has received the DTA update instruction is not received and it is confirmed that the terminal has not transmitted the uplink symbol based on the new TDD frame configuration information, not starting communication of the TDD frame based on the new TDD frame configuration information;
if confirmation information that the terminal has received the DTA update instruction is received, or it is confirmed that the terminal has enough slots for DTA update, or it is confirmed that the terminal has transmitted the uplink symbol based on the new TDD frame configuration information, starting communication of the TDD frame based on new TDD frame configuration information.

In an embodiment of the present disclosure, determining, according to state information, whether to start TDD frame communication based on the new TDD frame configuration information includes:
if the countdown value of the frame reaches 0, then if the confirmation information that the terminal has received the DTA update instruction is received, or it is confirmed that the terminal has enough slots for DTA update, or it is confirmed that the terminal has transmitted the uplink symbol based on the new TDD frame configuration information, starting communication of the TDD frame based on the new TDD frame configuration information.

Fig. 6 is a schematic flowchart 2 showing a dynamic time assignment method according to an embodiment of the present disclosure. As shown in Fig. 6, the dynamic time assignment method includes the following steps.

In step 601, receiving a DTA update instruction, wherein the DTA update instruction includes the number of downlink symbols and a countdown value of the TDD frame to be updated, wherein the countdown value of the frame is decremented until zero according to each TDD frame;

In an embodiment of the present disclosure, the method further includes: determining the state information based on the following judgment results:
whether the countdown value of the frame is 0;
whether it is ready for DTA update.

In step 602, determining, according to state information, whether to start TDD frame communication based on the new TDD frame configuration information, wherein the new TDD frame configuration information includes the number of downlink symbols of the TDD frame to be updated.

In an embodiment of the present disclosure, determining, according to state information, whether to start TDD frame communication based on the new TDD frame configuration information includes:
if a DTA update signaling is received and the countdown value of the frame does not reach 0, not starting communication of the TDD frame based on the new TDD frame configuration information;
if the countdown value of the frame reaches 0, or the DTA update is ready, starting communication of the TDD frame based on the new TDD frame configuration information;
if the countdown value of the frame reaches 0, and the DTA update is not ready, not starting communication of the TDD frame based on the new TDD frame configuration information.

The dynamic time assignment method of embodiments of the present disclosure is further described in detail in combination with the application scenarios below.

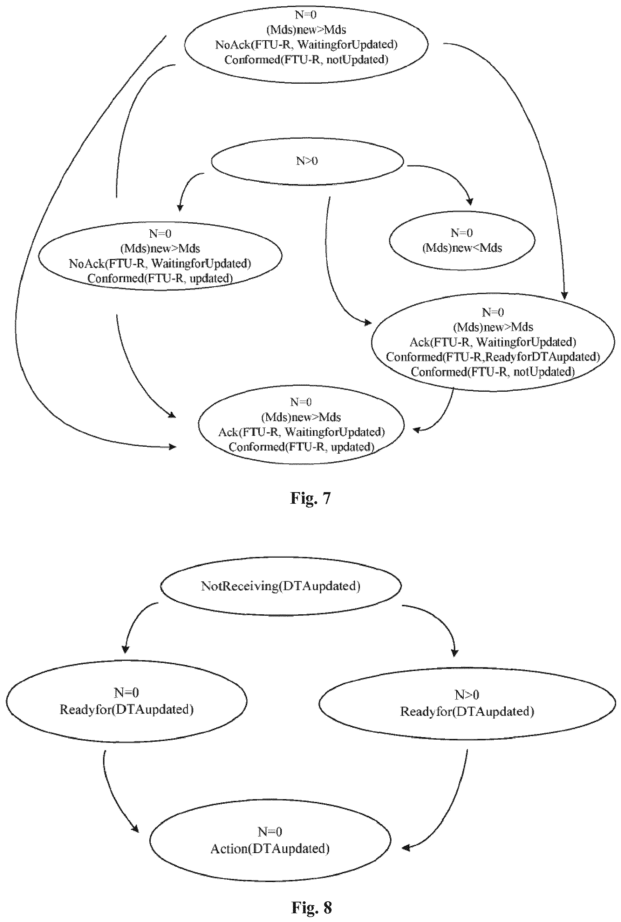

According to the countdown value (N) of the DTA frame, the change of the Mds to be adjusted, whether the confirmation information of receiving, by the terminal, the DTA update instruction is received, and whether the terminal has transmitted the uplink symbols based on the new TDD frame configuration information, etc., the central office (FTU-O) may be in different states after starting the DTA update, as shown in Fig. 7;, wherein, N is the countdown value of the DTA frame; (Mds)new indicates a new Mds to be adjusted; Conformed (FTU-R, updated) indicates that the terminal has transmitted the uplink symbols based on the new TDD frame configuration information; Conformed (FTU-R, notUpdated) indicates that the terminal has not transmitted the uplink symbol based on the new TDD frame configuration information; Ack (FTU-R, WaitingforUpdated) indicates that the central office has received confirmation information that the terminal has received the DTA update instruction; NoAck (FTU-R, WaitingforUpdated) indicates that the central office has not received confirmation information that the terminal has received the DTA update instruction; Conformed (FTU-R, ReadyforDTAupdated) indicates that the terminal has enough slots for DTA update (it may be judged by the N value corresponding to the confirmation information Ack). After the FTU-O initiating the DTU update, N>0, and N is decremented until it is 0 with the communication of the individual TDD frames.

When (Mds)new<Mds, the FTU-O may directly start the transmission of the TDD frame by using the updated Mds (i.e. (Mds)new) when N reaches zero.

When (Mds)new>Mds, in order to avoid potential conflicts when N reaches 0, it is necessary to judge, according to the state situation, whether to start the transmission of the TDD frame by using the updated Mds ((Mds)new):
a) if the central office does not receive the confirmation information that the terminal has received the DTA update instruction (i.e. NoAck (FTU-R, WaitingforUpdated)) and confirms that the terminal has not transmitted the uplink symbol based on the new TDD frame configuration information (i.e. Conformed (FTU-R, notUpdated)), the central office does not start the transmission of the TDD frame by using the updated Mds (i.e., (Mds)new);
b) if the central office has received the confirmation information that the terminal has received the DTA update instruction (i.e. Ack (FTU-R, WaitingforUpdated)) and confirms that the FTU-R has enough slots for DTA update (ie, Conformed (FTU-R, Ready for DTAupdated), judging by confirming the N value corresponding to the information Ack), or confirms that the terminal has transmitted the uplink symbol based on the new TDD frame configuration information (i.e. Conformed (FTU-R, Updated)), the central office starts the transmission of the TDD frame by using the updated Mds (i.e., (Mds)new).

The state diagram of the update process of the terminal (FTU-R) DTA is shown in Fig. 8. After the FTU-O starting the DTA update, if the management message carrying the DTA update signaling is lost, there will be a state in which the terminal does not receive the DTA function signaling (NotReceiving (DTAupdated)). After the terminal receives the DTA update instruction, N enters a decreasing state based on the received and transmitted TDD frame until N is 0. Readyfor (DTAupdated) indicates that the terminal is ready for DTA update (i.e., the DTA update slot required for the FTU-R); Action (DTAupdated) indicates that the terminal initiates operation based on the new TDD frame configuration information.

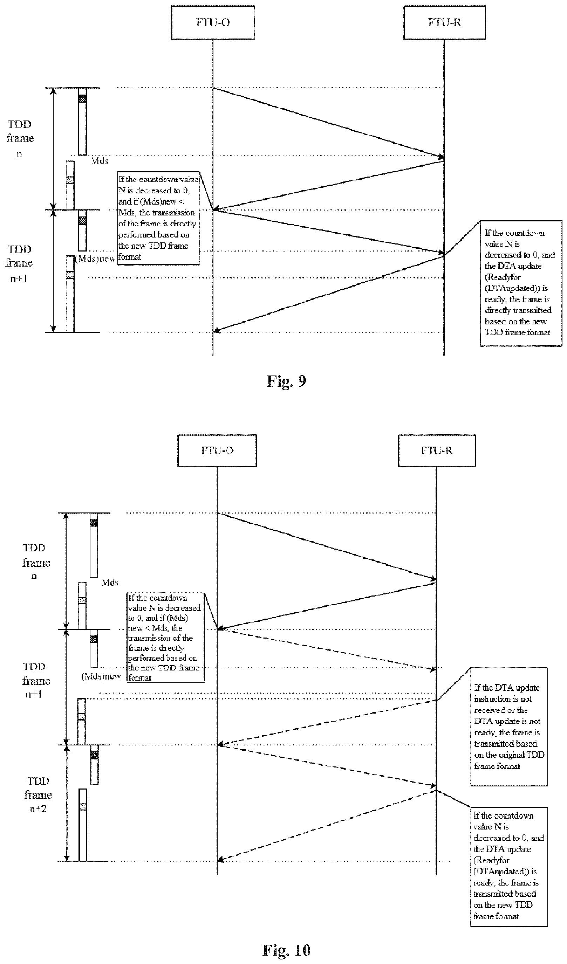

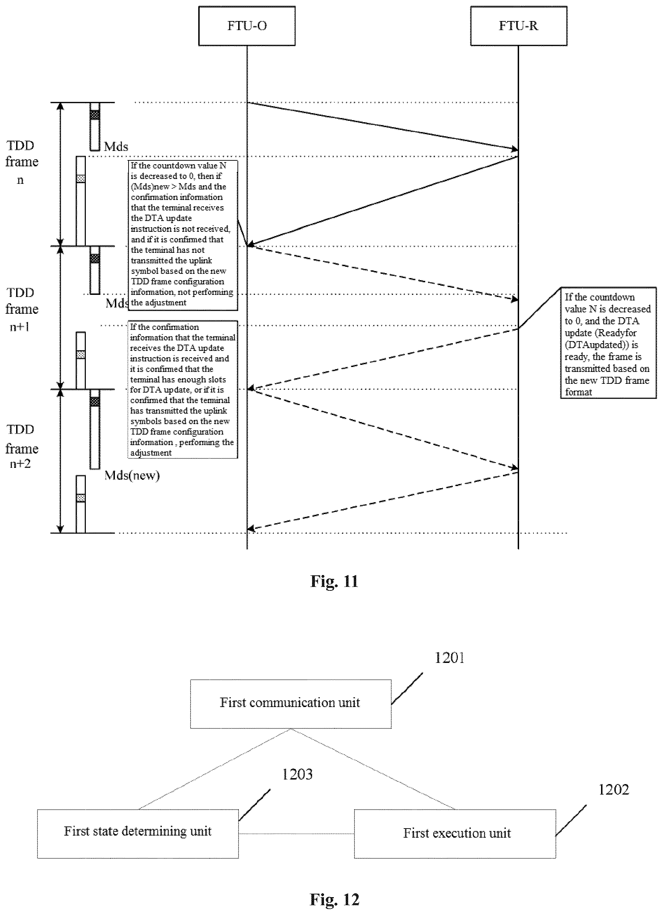

According to the state change of the central office and the terminal in the DTA update process, examples of the DTA update process when (Mds)new <Mds is shown in Fig. 9 and Fig. 10; and an example of the DTA update process when (Mds) new>Mds is shown in Fig. 11.

Referring to Fig. 9: for FTU-O, when the countdown value N is decreased to 0, and when (Mds)new < Mds, the transmission of the frame is directly performed based on the new TDD frame format. For the FTU-R, when the countdown value N is decreased to 0, and the DTA update (Readyfor (DTAupdated)) is ready, the frame is directly transmitted based on the new TDD frame format.

Referring to Fig. 10: for FTU-O, when the countdown value N is decreased to 0, and when (Mds) new < Mds, the transmission of the frame is directly performed based on the new TDD frame format. For the FTU-R, when the countdown value N is decreased to 0, and the DTA update instruction is not received or the DTA update is not ready, the frame is transmitted based on the original TDD frame format; when the countdown value N is decreased to 0, and the DTA update (Readyfor (DTAupdated)) is ready, the frame is directly transmitted based on the new TDD frame format.

Referring to Fig. 11: for FTU-O, when the countdown value N is decreased to 0, if (Mds)new > Mds, the confirmation information that the terminal receives the DTA update instruction is not received, and it is confirmed that the terminal has not transmitted the uplink symbol based on the new TDD frame configuration information, not adjusting Mds; when the countdown value N is decreased to 0, if the confirmation information that the terminal receives the DTA update instruction is received, and it is confirmed that the terminal has enough slots for DTA update, or it is confirmed that the terminal has transmitted the uplink symbols based on the new TDD frame configuration information, adjusting Mds. For FTU-R, when the countdown value N is decreased to 0, and the DTA update (Readyfor (DTAupdated)) is ready, the frame is transmitted based on the new TDD frame format.

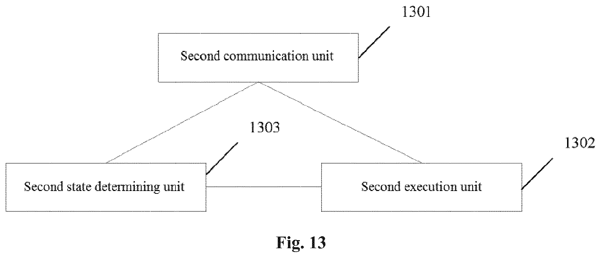

Fig. 12 and Fig. 13 are schematic diagrams showing the structure of the dynamic time assignment apparatus according to the embodiments of the present disclosure.

In Fig. 12, the apparatus includes:
a first communication unit 1201, configured to receive a DTA update request instruction, wherein the DTA update request instruction includes new TDD frame configuration information, wherein the new TDD frame configuration information includes the number of downlink symbols of the TDD frame to be updated;
wherein the first communication unit 1201 is configured to transmit a DTA update instruction to the terminal in each TDD frame continuously, wherein the DTA update instruction includes the number of downlink symbols and a countdown value of the TDD frame to be updated, wherein the countdown value of the frame is decremented until zero according to each TDD frame;
a first execution unit 1202, configured to determine, according to state information, whether to start TDD frame communication based on the new TDD frame configuration information.

The apparatus further includes: a first state determining unit 1203, configured to determine the state information based on the following judgment results:
whether the countdown value of the frame is 0;
whether the number of downlink symbols of the TDD frame to be updated is greater than the current number of downlink symbols;
whether it is confirmed that the terminal has transmitted an uplink symbol based on the new TDD frame configuration information;
whether the confirmation information that the terminal receives the DTA update instruction is received;
whether the terminal has enough time slots for DTA update.

In an embodiment of the present disclosure, the first execution unit 1202 is configured such that if the number of downlink symbols of the TDD frame to be updated is smaller than the current number of downlink symbols, and if the countdown value of the frame reaches 0, the communication of the TDD frame using the new TDD frame configuration information will be directly started.

The first execution unit 1202 is configured such that if the number of downlink symbols of the TDD frame to be updated is greater than the current number of downlink symbols, and if the countdown value of the frame reaches 0:
if the confirmation information that the terminal has received the DTA update instruction is not received and it is confirmed that the terminal has not transmitted the uplink symbol based on the new TDD frame configuration information, communication of the TDD frame based on new TDD frame configuration information will not be started; if the confirmation information that the terminal has received the DTA update instruction is received, or it is confirmed that the terminal has enough time slots for DTA update, or it is confirmed that the terminal has transmitted the uplink symbol based on the new TDD frame configuration information, communication of the TDD frame based on new TDD frame configuration information will be started.

The first execution unit 1202 is configured such that if the countdown value of the frame reaches 0, then if the confirmation information that the terminal has received the DTA update instruction is received, or it is confirmed that the terminal has enough time slots for DTA update, or it is confirmed that the terminal has transmitted the uplink symbol based on the new TDD frame configuration information, communication of the TDD frame based on new TDD frame configuration information will be started.

In Fig. 13, the apparatus includes:
a second communication unit 1301, configured to receive a DTA update instruction, wherein the DTA update instruction includes the number of downlink symbols and a countdown value of the TDD frame to be updated, wherein the countdown value of the frame is decremented until zero according to each TDD frame;
a second execution unit 1302, configured to determine, according to state information, whether to start TDD frame communication based on the new TDD frame configuration information, wherein the new TDD frame configuration information includes the number of downlink symbols of the TDD frame to be updated.

In an embodiment of the present disclosure, the apparatus further includes: a second state determining unit 1303, configured to determine the state information based on the following judgment results:
whether the countdown value of the frame is 0;
whether it is ready for DTA update.

The second state determining unit 1302 is configured such that if the DTA update signaling is received and the countdown value of the frame does not reach 0, communication of the TDD frame based on the new TDD frame configuration information will not be started; if the countdown value of the frame reaches 0, or the DTA update is ready, communication of the TDD frame based on the new TDD frame configuration information will be started; if the countdown value of the frame reaches 0, and the DTA update is not ready, communication of the TDD frame based on the new TDD frame configuration information will not be started.

The functions of the units in the dynamic time assignment apparatus shown in Fig. 12 and Fig. 13 may be understood by referring to the related description of the aforementioned dynamic time assignment method. The functions of the units in the dynamic time assignment device shown in Fig. 12 and Fig. 13 may be implemented by a program running on the processor or by a logic circuit.

According to embodiments of the present disclosure, there is provided a computer readable storage medium, storing computer executable instructions, the dynamic time assignment method as shown in Fig. 5 above is implemented when the computer executable instructions are executed by a processor.

According to embodiments of the present disclosure, there is provided a computer readable storage medium, storing computer executable instructions, the dynamic time assignment method as shown in Fig. 6 above is implemented when the computer executable instructions are executed by a processor.

Embodiments of the present disclosure may be provided as a method, system, or computer program product. Accordingly, the application may take the form of a hardware embodiment, a software embodiment, or an embodiment in combination with software and hardware. Moreover, embodiments of the present disclosure may take the form of a computer program product embodied on one or more computer usable storage medias (including but not limited to disk storage and optical storage, etc.) having computer usable program code embodied therein.

The present application is described with reference to flowchart and/or block diagrams of methods, apparatus (system), and computer program products according to embodiments of the present disclosure. It should be understood that each flow and/or block of flowcharts and/or block diagrams and a combination of the flows and/or blocks in the flowcharts and/or block diagrams may be implemented by computer program instructions. These computer program instructions may be provided to a processor of a general purpose computer, a special purpose computer, an embedded processor or other programmable data processing apparatuses to produce a machine, so that the instructions executed by a processor of a computer or other programmable data processing apparatuses are generated for implementing the specified functions in one or more flows of the flowchart or in a block or blocks of the flowchart.

The computer program instructions may also be stored in a computer readable memory that may direct a computer or other programmable data processing device to operate in a particular manner, such that the instructions stored in the computer readable memory produce an article of manufacture including the instruction apparatus. The instructions implement the specified functions in one or more blocks of the flow or in a flow or block diagram of the flowchart.

These computer program instructions may also be loaded onto a computer or other programmable data processing apparatus such that a series of operational steps are performed on a computer or other programmable apparatus to produce computer-implemented processing, so that instructions executed on a computer or other programmable apparatus provide steps for implementing the functions specified in one or more blocks of the flowchart or in a flow or block of the flowchart.

The above description is not intended to limit the scope of the present disclosure.

### Industrial Applicability

Adopting embodiments of the present disclosure may effectively improve the reliability and robustness of transceiver mechanism and the trigger mechanism of the DTA update signaling, and avoid the synchronization abnormality between the central office and the terminal and the DTA update failure due to the loss or error of the data symbols carrying the DTA update signaling. Thus effectively ensuring the smooth completion of the DTA update during the showtime phase.

## Claims

1. A dynamic time assignment method performed by an apparatus, comprising:
receiving a Dynamic Time Assignment update request instruction, called a DTA update request instruction, wherein the DTA update request instruction comprises new Time Division Duplexing frame configuration information, called TDD frame configuration information, wherein the new TDD frame configuration information comprises the number of downlink symbols of the TDD frame to be updated (501);
transmitting a DTA update instruction to a terminal in each TDD frame continuously, wherein the DTA update instruction comprises the number of downlink symbols and a countdown value of the TDD frame to be updated, wherein the countdown value of the frame is decremented until zero according to each TDD frame (502);
determining, according to state information, whether to start TDD frame communication based on the new TDD frame configuration information (503),
wherein the method further comprises: determining the state information based on the following judgment results:
whether the countdown value of the frame is 0;
whether the number of downlink symbols of the TDD frame to be updated is greater than the current number of downlink symbols;
whether it is confirmed that the terminal has transmitted an uplink symbol based on the new TDD frame configuration information;
whether confirmation information that the terminal receives the DTA update instruction is received;
whether the terminal has enough slots for DTA update,
wherein determining, according to state information, whether to start TDD frame communication based on the new TDD frame configuration information comprises:
if the number of downlink symbols of the TDD frame to be updated is smaller than the current number of downlink symbols, and if the countdown value of the frame reaches 0, directly starting the communication of the TDD frame using the new TDD frame configuration information; or
determining, according to state information, whether to start TDD frame communication based on the new TDD frame configuration information comprises:
if the number of downlink symbols of the TDD frame to be updated is greater than the current number of downlink symbols, and if the countdown value of the frame reaches 0:
if confirmation information that the terminal has received the DTA update instruction is not received and it is confirmed that the terminal has not transmitted the uplink symbol based on the new TDD frame configuration information, not starting communication of the TDD frame based on the new TDD frame configuration information;
if confirmation information that the terminal has received the DTA update instruction is received, or it is confirmed that the terminal has enough slots for DTA update, or it is confirmed that the terminal has transmitted the uplink symbol based on the new TDD frame configuration information, starting communication of the TDD frame based on new TDD frame configuration information; or
determining, according to state information, whether to start TDD frame communication based on the new TDD frame configuration information comprises:
if the countdown value of the frame reaches 0, then if confirmation information that the terminal has received the DTA update instruction is received, or it is confirmed that the terminal has enough slots for DTA update, or it is confirmed that the terminal has transmitted the uplink symbol based on the new TDD frame configuration information, starting communication of the TDD frame based on the new TDD frame configuration information.

2. A dynamic time assignment method performed by a terminal, comprising:
receiving a Dynamic Time Assignment, DTA, update instruction, wherein the DTA update instruction comprises the number of downlink symbols and a countdown value of the Time Division Duplexing, TDD, frame to be updated, wherein the countdown value of the frame is decremented until zero according to each TDD frame (601);
determining, according to state information, whether to start communication of the TDD frame based on the new TDD frame configuration information, wherein the new TDD frame configuration information comprises the number of downlink symbols of the TDD frame to be updated (602),
wherein the method further comprises: determining the state information based on the following judgment results:
whether the countdown value of the frame is 0;
whether it is ready for DTA update,
wherein determining, according to state information, whether to start communication of the TDD frame based on the new TDD frame configuration information comprises:
if a DTA update signaling is received and the countdown value of the frame does not reach 0, not starting communication of the TDD frame based on the new TDD frame configuration information;
if the countdown value of the frame reaches 0, or the DTA update is ready, starting communication of the TDD frame based on the new TDD frame configuration information;
if the countdown value of the frame reaches 0, and the DTA update is not ready, not starting communication of the TDD frame based on the new TDD frame configuration information.

3. A dynamic time assignment apparatus, comprising:
a first communication unit (1201), configured to receive a Dynamic Time Assignment, DTA, update request instruction, wherein the DTA update request instruction comprises new Time Division Duplexing, TDD, frame configuration information, wherein the new TDD frame configuration information comprises the number of downlink symbols of the TDD frame to be updated;
the first communication unit (1201), further configured to transmit a DTA update instruction to a terminal in each TDD frame continuously, wherein the DTA update instruction comprises the number of downlink symbols and a countdown value of the TDD frame to be updated, wherein the countdown value of the frame is decremented until zero according to each TDD frame; and
a first execution unit (1202), configured to determine, according to state information, whether to start communication of the TDD frame based on the new TDD frame configuration information,
wherein the apparatus further comprises: a first state determining unit (1203), configured to determine the state information based on the following judgment results:
whether the countdown value of the frame is 0;
whether the number of downlink symbols of the TDD frame to be updated is greater than the current number of downlink symbols;
whether it is confirmed that the terminal has transmitted an uplink symbol based on the new TDD frame configuration information;
whether confirmation information that the terminal receives the DTA update instruction is received;
whether the terminal has enough slots for DTA update,
wherein the first execution unit (1202) is configured such that if the number of downlink symbols of the TDD frame to be updated is smaller than the current number of downlink symbols, and if the countdown value of the frame reaches 0, the communication of the TDD frame using the new TDD frame configuration information will be directly started; or
the first execution unit (1202) is configured such that if the number of downlink symbols of the TDD frame to be updated is greater than the current number of downlink symbols, and if the countdown value of the frame reaches 0:
if confirmation information that the terminal has received the DTA update instruction is not received and it is confirmed that the terminal has not transmitted the uplink symbol based on the new TDD frame configuration information, communication of the TDD frame based on new TDD frame configuration information will not be started;
if confirmation information that the terminal has received the DTA update instruction is received, or it is confirmed that the terminal has enough slots for DTA update, or it is confirmed that the terminal has transmitted the uplink symbol based on the new TDD frame configuration information, communication of the TDD frame based on new TDD frame configuration information will be started; or
the first execution unit (1202) is configured such that if the countdown value of the frame reaches 0, then if confirmation information that the terminal has received the DTA update instruction is received, or it is confirmed that the terminal has enough slots for DTA update, or it is confirmed that the terminal has transmitted the uplink symbol based on the new TDD frame configuration information, communication of the TDD frame based on the new TDD frame configuration information will be started.

4. A dynamic time assignment apparatus, comprising:
a second communication unit (1301), configured to receive a Dynamic Time Assignment, DTA, update instruction, wherein the DTA update instruction comprises the number of downlink symbols and a countdown value of the TDD frame to be updated, wherein the countdown value of the frame is decremented until zero according to each TDD frame;
a second execution unit (1302), configured to determine, according to state information, whether to start communication of the TDD frame based on the new TDD frame configuration information, wherein the new TDD frame configuration information comprises the number of downlink symbols of the TDD frame to be updated,
wherein the apparatus further comprises: a second state determining unit (1303), configured to determine the state information based on the following judgment results:
whether the countdown value of the frame is 0;
whether it is ready for DTA update,
wherein the second state determining unit (1303) is configured such that
if a DTA update signaling is received and the countdown value of the frame does not reach 0, communication of the TDD frame based on the new TDD frame configuration information will not be started;
if the countdown value of the frame reaches 0, or the DTA update is ready, communication of the TDD frame based on the new TDD frame configuration information will be started;
if the countdown value of the frame reaches 0, and the DTA update is not ready, communication of the TDD frame based on the new TDD frame configuration information is not started.

5. A computer readable storage medium, storing computer executable instructions, which when executed by the apparatus in claim 3 cause the apparatus to execute the dynamic time assignment method of claim 1.

6. A computer readable storage medium, storing computer executable instructions, which when executed by the apparatus of claim 4 cause the apparatus to execute the dynamic time assignment method of claim 2.

## Patentansprüche

1. Verfahren zur dynamischen Zeitzuweisung, das von einer Vorrichtung durchgeführt wird, umfassend:
Empfangen eines Aktualisierungsanforderungsbefehls für die dynamische Zeitzuweisung, der als DTA-Aktualisierungsanforderungsbefehl bezeichnet wird, wobei der DTA-Aktualisierungsanforderungsbefehl neue Zeitmultiplex-Rahmenkonfigurationsinformationen, die als TDD-Rahmenkonfigurationsinformationen bezeichnet werden, umfasst, wobei die neuen TDD-Rahmenkonfigurationsinformationen die Anzahl der Abwärtsverbindungssymbole des zu aktualisierenden TDD-Rahmens umfassen (501);
Übertragen einer DTA-Aktualisierungsanweisung an ein Endgerät in jedem TDD-Rahmen fortlaufend, wobei die DTA-Aktualisierungsanweisung die Anzahl der Downlink-Symbole und einen Countdown-Wert des zu aktualisierenden TDD-Rahmens umfasst, wobei der Countdown-Wert des Rahmens gemäß jedem TDD-Rahmen auf Null dekrementiert wird (502);
Bestimmen, entsprechend der Zustandsinformation, ob die TDD-Rahmenkommunikation basierend auf der neuen TDD-Rahmenkonfigurationsinformation gestartet werden soll (503),
wobei das Verfahren weiterhin umfasst: Bestimmen der Zustandsinformation basierend auf den folgenden Beurteilungsergebnissen:
ob der Countdown-Wert des Rahmens 0 ist;
ob die Anzahl der Downlink-Symbole des zu aktualisierenden TDD-Rahmens größer ist als die aktuelle Anzahl der Downlink-Symbole;
ob bestätigt wird, dass das Endgerät ein Uplink-Symbol basierend auf den neuen TDD-Rahmenkonfigurationsinformationen übertragen hat;
ob die Bestätigungsinformation, dass das Endgerät die DTA-Aktualisierungsanweisung empfängt, empfangen wird;
ob das Endgerät genügend Schlitze für die DTA-Aktualisierung hat,
wobei das Bestimmen, gemäß der Zustandsinformation, ob eine TDD-Rahmenkommunikation basierend auf der neuen TDD-Rahmenkonfigurationsinformation zu starten ist, umfasst:
wenn die Anzahl der Downlink-Symbole des zu aktualisierenden TDD-Rahmens kleiner ist als die aktuelle Anzahl der Downlink-Symbole, und wenn der Countdown-Wert des Rahmens 0 erreicht, direktes Starten der Kommunikation des TDD-Rahmens unter Verwendung der neuen TDD-Rahmenkonfigurationsinformationen; oder
Bestimmen, gemäß der Zustandsinformation, ob die TDD-Rahmenkommunikation basierend auf der neuen TDD-Rahmenkonfigurationsinformation zu starten ist, umfassend:
wenn die Anzahl der Downlink-Symbole des zu aktualisierenden TDD-Rahmens größer ist als die aktuelle Anzahl der Downlink-Symbole, und wenn der Countdown-Wert des Rahmens 0 erreicht:
wenn die Bestätigungsinformation, dass das Endgerät den DTA-Aktualisierungsbefehl empfangen hat, nicht empfangen wird und bestätigt wird, dass das Endgerät das Uplink-Symbol basierend auf der neuen TDD-Rahmenkonfigurationsinformation nicht übertragen hat, die Kommunikation des TDD-Rahmens basierend auf der neuen TDD-Rahmenkonfigurationsinformation nicht gestartet wird;
wenn Bestätigungsinformationen empfangen werden, dass das Endgerät die DTA-Aktualisierungsanweisung empfangen hat, oder bestätigt wird, dass das Endgerät genügend Schlitze für die DTA-Aktualisierung hat, oder bestätigt wird, dass das Endgerät das Uplink-Symbol basierend auf den neuen TDD-Rahmenkonfigurationsinformationen übertragen hat, Starten der Kommunikation des TDD-Rahmens basierend auf den neuen TDD-Rahmenkonfigurationsinformationen; oder
Bestimmen, ob die Kommunikation des TDD-Rahmens basierend auf den neuen TDD-Rahmenkonfigurationsinformationen zu starten ist, gemäß der Zustandsinformation, umfassend:
wenn der Countdown-Wert des Rahmens 0 erreicht, dann, wenn Bestätigungsinformation, dass das Endgerät die DTA-Aktualisierungsanweisung empfangen hat, empfangen wird, oder bestätigt wird, dass das Endgerät genügend Schlitze für die DTA-Aktualisierung hat, oder bestätigt wird, dass das Endgerät das Uplink-Symbol basierend auf der neuen TDD-Rahmenkonfigurationsinformation übertragen hat, Starten der Kommunikation des TDD-Rahmens basierend auf der neuen TDD-Rahmenkonfigurationsinformation.

2. Verfahren zur dynamischen Zeitzuweisung, das von einem Endgerät durchgeführt wird, umfassend:
Empfangen eines Dynamic Time Assignment, DTA, Aktualisierungsinstruktion, wobei die DTA-Aktualisierungsinstruktion die Anzahl von Abwärtsverbindungssymbolen und einen Countdown-Wert des zu aktualisierenden TDD-Rahmens (Time Division Duplexing, TDD) umfasst, wobei der Countdown-Wert des Rahmens gemäß jedem TDD-Rahmen (601) auf Null dekrementiert wird;
Bestimmen, entsprechend der Zustandsinformation, ob die Kommunikation des TDD-Rahmens basierend auf der neuen TDD-Rahmenkonfigurationsinformation zu starten ist, wobei die neue TDD-Rahmenkonfigurationsinformation die Anzahl der Downlink-Symbole des zu aktualisierenden TDD-Rahmens umfasst (602),
wobei das Verfahren ferner umfasst: Bestimmen der Zustandsinformationen auf der Grundlage der folgenden Beurteilungsergebnisse:
ob der Countdown-Wert des Rahmens 0 ist;
ob er für die DTA-Aktualisierung bereit ist,
wobei das Bestimmen, gemäß der Zustandsinformation, ob die Kommunikation des TDD-Rahmens basierend auf der neuen TDD-Rahmenkonfiguration Information umfasst:
wenn eine DTA-Aktualisierungssignalisierung empfangen wird und der Countdown-Wert des Rahmens nicht 0 erreicht, kein Starten der Kommunikation des TDD-Rahmens auf der Grundlage der neuen TDD-Rahmenkonfigurationsinformationen;
wenn der Countdown-Wert des Rahmens 0 erreicht oder die DTA-Aktualisierung bereit ist, Starten der Kommunikation des TDD-Rahmens auf der Grundlage der neuen TDD-Rahmenkonfigurationsinformationen;
wenn der Countdown-Wert des Rahmens 0 erreicht und die DTA-Aktualisierung nicht bereit ist, wird die Kommunikation des TDD-Rahmens basierend auf den neuen TDD-Rahmenkonfigurationsinformationen nicht gestartet.

3. Dynamische Zeitzuweisungsvorrichtung, umfassend:
eine erste Kommunikationseinheit (1201), die so konfiguriert ist, dass sie einen Aktualisierungsanforderungsbefehl für die dynamische Zeitzuweisung, DTA, empfängt, wobei der DTA-Aktualisierungsanforderungsbefehl neue TDD-Rahmenkonfigurationsinformationen (Time Division Duplexing) umfasst, wobei die neuen TDD-Rahmenkonfigurationsinformationen die Anzahl der Abwärtsverbindungssymbole des zu aktualisierenden TDD-Rahmens umfassen;
die erste Kommunikationseinheit (1201), die ferner so konfiguriert ist, dass sie in jedem TDD-Rahmen kontinuierlich einen DTA-Aktualisierungsbefehl an ein Endgerät sendet, wobei der DTA-Aktualisierungsbefehl die Anzahl der Downlink-Symbole und einen Countdown-Wert des zu aktualisierenden TDD-Rahmens umfasst, wobei der Countdown-Wert des Rahmens gemäß jedem TDD-Rahmen auf Null dekrementiert wird; und
eine erste Ausführungseinheit (1202), die konfiguriert ist, um gemäß der Zustandsinformation zu bestimmen, ob die Kommunikation des TDD-Rahmens basierend auf der neuen TDD-Rahmenkonfigurationsinformation zu starten ist,
wobei die Vorrichtung ferner umfasst: eine erste Zustandsbestimmungseinheit (1203), die konfiguriert ist, um die Zustandsinformationen basierend auf den folgenden Beurteilungsergebnissen zu bestimmen:
ob der Countdown-Wert des Rahmens 0 ist;
ob die Anzahl der Downlink-Symbole des zu aktualisierenden TDD-Rahmens größer ist als die aktuelle Anzahl der Downlink-Symbole;
ob bestätigt wird, dass das Endgerät ein Uplink-Symbol basierend auf den neuen TDD-Rahmenkonfigurationsinformationen übertragen hat;
ob die Bestätigungsinformation, dass das Endgerät die DTA-Aktualisierungsanweisung empfängt, empfangen wird;
ob das Endgerät genügend Schlitze für die DTA-Aktualisierung hat,
wobei die erste Ausführungseinheit (1202) so konfiguriert ist, dass, wenn die Anzahl der Downlink-Symbole des zu aktualisierenden TDD-Rahmens kleiner ist als die aktuelle Anzahl der Downlink-Symbole, und wenn der Countdown-Wert des Rahmens 0 erreicht, die Kommunikation des TDD-Rahmens unter Verwendung der neuen TDD-Rahmenkonfigurationsinformationen direkt gestartet wird; oder
die erste Ausführungseinheit (1202) so konfiguriert ist, dass, wenn die Anzahl der Downlink-Symbole des zu aktualisierenden TDD-Rahmens größer ist als die aktuelle Anzahl der Downlink-Symbole, und wenn der Countdown-Wert des Rahmens 0 erreicht:
wenn die Bestätigungsinformation, dass das Endgerät die DTA-Aktualisierungsanweisung empfangen hat, nicht empfangen wird und bestätigt wird, dass das Endgerät das Uplink-Symbol basierend auf den neuen TDD-Rahmenkonfigurationsinformationen nicht übertragen hat, wird die Kommunikation des TDD-Rahmens basierend auf den neuen TDD-Rahmenkonfigurationsinformationen nicht gestartet;
wenn Bestätigungsinformationen empfangen werden, dass das Endgerät die DTA-Aktualisierungsanweisung empfangen hat, oder bestätigt wird, dass das Endgerät genügend Schlitze für die DTA-Aktualisierung hat, oder bestätigt wird, dass das Endgerät das Uplink-Symbol basierend auf den neuen TDD-Rahmenkonfigurationsinformationen übertragen hat, wird die Kommunikation des TDD-Rahmens basierend auf den neuen TDD-Rahmenkonfigurationsinformationen gestartet; oder
die erste Ausführungseinheit (1202) so konfiguriert ist, dass, wenn der Countdown-Wert des Rahmens 0 erreicht, dann, wenn Bestätigungsinformationen, dass das Endgerät die DTA-Aktualisierungsanweisung empfangen hat, empfangen werden, oder bestätigt wird, dass das Endgerät genügend Schlitze für die DTA-Aktualisierung hat, oder bestätigt wird, dass das Endgerät das Uplink-Symbol basierend auf den neuen TDD-Rahmenkonfigurationsinformationen übertragen hat, die Kommunikation des TDD-Rahmens basierend auf den neuen TDD-Rahmenkonfigurationsinformationen gestartet wird.

4. Dynamische Zeitzuweisungsvorrichtung, die umfasst:
eine zweite Kommunikationseinheit (1301), die so konfiguriert ist, dass sie einen Aktualisierungsbefehl für die dynamische Zeitzuweisung (Dynamic Time Assignment, DTA) empfängt, wobei der DTA-Aktualisierungsbefehl die Anzahl der Downlink-Symbole und einen Countdown-Wert des zu aktualisierenden TDD-Rahmens umfasst, wobei der Countdown-Wert des Rahmens gemäß jedem TDD-Rahmen auf Null dekrementiert wird;
eine zweite Ausführungseinheit (1302), die konfiguriert ist, um gemäß Zustandsinformationen zu bestimmen, ob die Kommunikation des TDD-Rahmens basierend auf den neuen TDD-Rahmenkonfigurationsinformationen zu starten ist, wobei die neuen TDD-Rahmenkonfigurationsinformationen die Anzahl der Downlink-Symbole des zu aktualisierenden TDD-Rahmens umfassen,
wobei die Vorrichtung ferner umfasst: eine zweite Zustandsbestimmungseinheit (1303), die so konfiguriert ist, dass sie die Zustandsinformationen basierend auf den folgenden Beurteilungsergebnissen bestimmt:
ob der Countdown-Wert des Rahmens 0 ist;
ob er für eine DTA-Aktualisierung bereit ist,
wobei die zweite zustandsbestimmende Einheit (1303) so konfiguriert ist, dass, wenn eine DTA-Aktualisierungssignalisierung empfangen wird und der Countdown-Wert des Rahmens nicht 0 erreicht, die Kommunikation des TDD-Rahmens basierend auf der neuen TDD-Rahmenkonfigurationsinformation nicht gestartet wird;
wenn der Countdown-Wert des Rahmens 0 erreicht oder das DTA-Update bereit ist, wird die Kommunikation des TDD-Rahmens basierend auf den neuen TDD-Rahmenkonfigurationsinformationen gestartet;
wenn der Countdown-Wert des Rahmens 0 erreicht und das DTA-Update nicht bereit ist, wird die Kommunikation des TDD-Rahmens basierend auf den neuen TDD-Rahmenkonfigurationsinformationen nicht gestartet.

5. Computerlesbares Speichermedium, das computerausführbare Befehle speichert, die bei Ausführung durch die Vorrichtung nach Anspruch 3 die Vorrichtung veranlassen, das dynamische Zeitzuweisungsverfahren nach Anspruch 1 auszuführen.

6. Computerlesbares Speichermedium, das computerausführbare Befehle speichert, die bei Ausführung durch die Vorrichtung nach Anspruch 4 die Vorrichtung veranlassen, das dynamische Zeitzuweisungsverfahren nach Anspruch 2 auszuführen.

## Revendications

1. Procédé d'affectation temporelle dynamique exécuté par un appareil, comprenant :
recevoir une instruction de demande de mise à jour d'affectation temporelle dynamique, appelée une instruction de demande de mise à jour DTA, dans lequel l'instruction de demande de mise à jour DTA comprend de nouvelles informations de configuration de trame de duplexage par répartition dans le temps, appelées informations de configuration de trame TDD, dans lequel les nouvelles informations de configuration de trame TDD comprennent le nombre de symboles de liaison descendante de la trame TDD à mettre à jour (501) ;
transmettre une instruction de mise à jour de DTA à un terminal dans chaque trame TDD en continu, dans lequel l'instruction de mise à jour DTA comprend le nombre de symboles de liaison descendante et une valeur de décompte de la trame TDD à mettre à jour, dans lequel la valeur de décompte de la trame est décrémentée jusqu'à zéro selon chaque trame TDD (502) ;
déterminer, selon des informations d'état, s'il faut commencer la communication de trame TDD sur la base des nouvelles informations de configuration de trame TDD (503),
dans lequel le procédé comprend en outre : déterminer des informations d'état sur la base des résultats de jugement suivants :
si la valeur de décompte de la trame est 0 ;
si le nombre de symboles de liaison descendante de la trame TDD à mettre à jour est supérieur au nombre actuel de symboles de liaison descendante ;
s'il est confirmé que le terminal a transmis un symbole de liaison montante sur la base des nouvelles informations de configuration de trame TDD;
si l'information de confirmation que le terminal reçoit l'instruction de mise à jour DTA est reçue ;
si le terminal dispose de suffisamment de créneaux pour la mise à jour DTA,
dans lequel déterminer, selon l'information d'état, s'il faut commencer la communication de trame TDD sur la base de la nouvelle information de configuration de trame TDD comprend :
si le nombre de symboles de liaison descendante de la trame TDD à mettre à jour est inférieur au nombre actuel de symboles de liaison descendante, et si la valeur du compte à rebours de la trame atteint 0, démarrer directement la communication de la trame TDD en utilisant les nouvelles informations de configuration de la trame TDD ; ou
déterminer, selon des informations d'état, s'il faut commencer la communication de la trame TDD sur la base des nouvelles informations de configuration de trame TDD comprend :
si le nombre de symboles de liaison descendante de la trame TDD à mettre à jour est supérieur au nombre actuel de symboles de liaison descendante, et si la valeur de décompte de la trame atteint 0 :
si l'information de confirmation que le terminal a reçu l'instruction de mise à jour DTA n'est pas reçue et s'il est confirmé que le terminal n'a pas transmis le symbole de liaison montante sur la base des nouvelles informations de configuration de la trame TDD, ne pas commencer la communication de la trame TDD sur la base des nouvelles informations de configuration de la trame TDD ;
si l'information de confirmation que le terminal a reçu l'instruction de mise à jour DTA est reçue, ou s'il est confirmé que le terminal dispose de suffisamment d'emplacements pour la mise à jour DTA, ou s'il est confirmé que le terminal a transmis le symbole de liaison montante sur la base des nouvelles informations de configuration de la trame TDD, démarrer la communication de la trame TDD sur la base des nouvelles informations de configuration de la trame TDD ; ou
déterminer, en fonction des informations d'état, s'il faut commencer la communication de la trame TDD sur la base des nouvelles informations de configuration de la trame TDD comprend :
si la valeur du compte à rebours de la trame atteint 0, alors, si des informations de confirmation que le terminal a reçu l'instruction de mise à jour DTA sont reçues, ou s'il est confirmé que le terminal a suffisamment de créneaux pour la mise à jour DTA, ou s'il est confirmé que le terminal a transmis le symbole de liaison montante sur la base des nouvelles informations de configuration de la trame TDD, démarrer la communication de la trame TDD sur la base des nouvelles informations de configuration de la trame TDD.

2. Procédé d'affectation dynamique de temps exécuté par un terminal, comprenant :
recevoir une instruction de mise à jour d'assignation de temps dynamique, DTA,
dans lequel l'instruction de mise à jour DTA comprend le nombre de symboles de liaison descendante et une valeur de compte à rebours de la trame de duplexage par répartition dans le temps, TDD, à mettre à jour, dans lequel la valeur de compte à rebours de la trame est décrémentée jusqu'à zéro selon chaque trame TDD (601) ;
déterminer, selon des informations d'état, s'il faut commencer la communication de la trame TDD sur la base des nouvelles informations de configuration de la trame TDD, dans lequel les nouvelles informations de configuration de la trame TDD comprennent le nombre de symboles de liaison descendante de la trame TDD à mettre à jour (602),
dans lequel le procédé comprend en outre : déterminer des informations d'état sur la base des résultats de jugement suivants :
si la valeur du compte à rebours de la trame est 0 ;
si il est prêt pour la mise à jour DTA,
dans lequel déterminer, en fonction des informations d'état, s'il faut commencer à communication de la trame TDD sur la base de la nouvelle configuration de la trame TDD comprend :
si une signalisation de mise à jour DTA est reçue et que la valeur de compte à rebours de la trame n'atteint pas 0, ne pas commencer la communication de la trame TDD sur la base des nouvelles informations de configuration de la trame TDD ;
si la valeur du compte à rebours de la trame atteint 0, ou si la mise à jour DTA est prête, démarrer la communication de la trame TDD sur la base des nouvelles informations de configuration de la trame TDD ;
si la valeur du compte à rebours de la trame atteint 0, et que la mise à jour DTA n'est pas prête, ne pas lancer la communication de la trame TDD sur la base des nouvelles informations de configuration de la trame TDD.

3. Appareil d'attribution dynamique de temps, comprenant :
une première unité de communication (1201), configurée pour recevoir une instruction de demande de mise à jour d'affectation temporelle dynamique, DTA, dans laquelle l'instruction de demande de mise à jour DTA comprend de nouvelles informations de configuration de la trame de duplexage par répartition dans le temps, TDD, dans laquelle les nouvelles informations de configuration de la trame TDD comprennent le nombre de symboles de liaison descendante de la trame TDD à mettre à jour ;
la première unité de communication (1201), configurée en outre pour transmettre une instruction de mise à jour DTA à un terminal dans chaque trame TDD en continu, dans laquelle l'instruction de mise à jour DTA comprend le nombre de symboles de liaison descendante et une valeur de décompte de la trame TDD à mettre à jour, dans laquelle la valeur de décompte de la trame est décrémentée jusqu'à zéro selon chaque trame TDD ; et
une première unité d'exécution (1202), configurée pour déterminer, selon des informations d'état, s'il faut commencer la communication de la trame TDD sur la base des nouvelles informations de configuration de la trame TDD,
dans lequel l'appareil comprend en outre : une première unité de détermination d'état (1203), configurée pour déterminer les informations d'état sur la base des résultats de jugement suivants :
si la valeur de décompte de la trame est 0 ;
si le nombre de symboles de liaison descendante de la trame TDD à mettre à jour est supérieur au nombre actuel de symboles de liaison descendante ;
s'il est confirmé que le terminal a transmis un symbole de liaison montante sur la base des nouvelles informations de configuration de la trame TDD;
si l'information de confirmation que le terminal reçoit l'instruction de mise à jour DTA est reçue ;
si le terminal dispose de suffisamment de créneaux pour la mise à jour DTA,
dans lequel la première unité d'exécution (1202) est configurée de telle sorte que si le nombre de symboles de liaison descendante de la trame TDD à mettre à jour est inférieur au nombre actuel de symboles de liaison descendante, et si la valeur de décompte de la trame atteint 0, la communication de la trame TDD utilisant les nouvelles informations de configuration de la trame TDD sera directement lancée ; ou
la première unité d'exécution (1202) est configurée de telle sorte que si le nombre de symboles de liaison descendante de la trame TDD à mettre à jour est supérieur au nombre actuel de symboles de liaison descendante, et si la valeur de compte à rebours de la trame atteint 0 :
si l'information de confirmation que le terminal a reçu l'instruction de mise à jour DTA n'est pas reçue et s'il est confirmé que le terminal n'a pas transmis le symbole de liaison montante basé sur la nouvelle information de configuration de la trame TDD, la communication de la trame TDD basée sur la nouvelle information de configuration de la trame TDD ne sera pas lancée
si l'information de confirmation que le terminal a reçu l'instruction de mise à jour DTA est reçue, ou s'il est confirmé que le terminal a suffisamment d'emplacements pour la mise à jour DTA, ou s'il est confirmé que le terminal a transmis le symbole de liaison montante sur la base des nouvelles informations de configuration de la trame TDD, la communication de la trame TDD sur la base des nouvelles informations de configuration de la trame TDD sera lancée ; ou
la première unité d'exécution (1202) est configurée de telle sorte que si la valeur de compte à rebours de la trame atteint 0, alors si des informations de confirmation que le terminal a reçu l'instruction de mise à jour DTA sont reçues, ou s'il est confirmé que le terminal a suffisamment de créneaux pour la mise à jour DTA, ou s'il est confirmé que le terminal a transmis le symbole de liaison montante sur la base des nouvelles informations de configuration de la trame TDD, la communication de la trame TDD sur la base des nouvelles informations de configuration de la trame TDD sera lancée.

4. Appareil d'attribution dynamique de temps, comprenant :
une deuxième unité de communication (1301), configurée pour recevoir une instruction de mise à jour d'affectation dynamique de temps, DTA, dans laquelle l'instruction de mise à jour DTA comprend le nombre de symboles de liaison descendante et une valeur de décompte de la trame TDD à mettre à jour, dans laquelle la valeur de décompte de la trame est décrémentée jusqu'à zéro selon chaque trame TDD ;
une deuxième unité d'exécution (1302), configurée pour déterminer, selon des informations d'état, s'il faut commencer la communication de la trame TDD sur la base des nouvelles informations de configuration de la trame TDD, dans laquelle les nouvelles informations de configuration de la trame TDD comprennent le nombre de symboles de liaison descendante de la trame TDD à mettre à jour,
dans lequel l'appareil comprend en outre : une seconde unité de détermination d'état (1303), configurée pour déterminer les informations d'état sur la base des résultats de jugement suivants :
si la valeur du compte à rebours de la trame est 0 ;
s'il est prêt pour la mise à jour DTA,
dans lequel la seconde unité de détermination d'état (1303) est configurée de telle sorte que si une signalisation de mise à jour DTA est reçue et que la valeur de compte à rebours de la trame n'atteint pas 0, la communication de la trame TDD basée sur les nouvelles informations de configuration de la trame TDD ne sera pas lancée ;
si la valeur du compte à rebours de la trame atteint 0, ou si la mise à jour DTA est prête, la communication de la trame TDD basée sur les nouvelles informations de configuration de la trame TDD sera lancée ;
si la valeur du compte à rebours de la trame atteint 0, et que la mise à jour DTA n'est pas prête, la communication de la trame TDD basée sur les nouvelles informations de configuration de la trame TDD n'est pas lancée.

5. Support de stockage lisible par ordinateur, stockant des instructions exécutables par ordinateur, qui, lorsqu'elles sont exécutées par l'appareil de la revendication 3, amènent l'appareil à exécuter le procédé d'affectation dynamique de temps de la revendication 1.

6. Support de stockage lisible par ordinateur, stockant des instructions exécutables par ordinateur, qui, lorsqu'elles sont exécutées par l'appareil de la revendication 4, amènent l'appareil à exécuter le procédé d'affectation dynamique de temps de la revendication 2.
